# EUROPEAN PATENT APPLICATION

(11) **EP 4 451 717 A1**
(43) Date of publication of application: **23.10.2024**
(21) Application number: 23745866.6
(22) Date of filing: 06.01.2023
(51) Int. Cl.: H04W 8/14

(54) **COMMUNICATION METHOD AND RELATED DEVICE**

(30) Priority: 29.01.2022 CN 202210112401
(71) Applicant: Huawei Technologies Co., Ltd., Shenzhen, Guangdong 518129 (CN)
(72) Inventor: ZHANG, Roujia, Shenzhen, Guangdong 518129 (CN); SUN, Fei, Shenzhen, Guangdong 518129 (CN); ZENG, Qinghai, Shenzhen, Guangdong 518129 (CN)
(74) Representative: Körber, Martin Hans
(86) International application number: PCT/CN2023/071096
(87) International publication number: WO 2023/142981

(57) **Abstract**

This application provides a communication method and a related apparatus. In the communication method, when a first DU sets up a connection to a first CU but the first CU does not support a first slice, and a second CU supports the first slice, the first DU may set up a connection to the second CU based on transport layer information of the second CU and an identifier or a name of the second CU, or the second CU may update the connection between the first CU and the first DU to a connection between the second CU and the first DU. Therefore, a difference between internal resources of a base station is fully used to support different slice service capabilities on a RAN side, and flexibility and coverage of providing a slice service for UE are improved.

## Description

This application claims priority to Chinese Patent Application No. 202210112401.0, filed with the China National Intellectual Property Administration on January 29, 2022 and entitled "COMMUNICATION METHOD AND RELATED APPARATUS", which is incorporated herein by reference in its entirety.

### TECHNICAL FIELD

The present invention relates to the field of electronic technologies, and specifically, to a communication method and a related apparatus.

### BACKGROUND

With development of mobile communication technologies, various new services and application scenarios continuously emerge, and requirements of these services on network functions, connection performance, security, and the like are greatly different. If a single network is used to carry these services, it is very difficult to meet requirements for high bandwidth, low latency, high reliability, and the like. In addition, building a new network for each type of service brings huge costs. This requires a 5th generation (5th Generation, 5G) mobile communication system and a future mobile communication system to be flexible and scalable, and to meet different service requirements.

Therefore, end-to-end network slices (Network Slicing) are used to provide customized network services for users to meet requirements of various new services, such as high bandwidth, low latency, and high reliability. Currently, resource integration between base stations can alleviate, to some extent, a problem of insufficient coverage caused by a current base station (nextgeneration Node basestation, gNB) not supporting a slice service initiated by user equipment (user equipment, UE). However, differentiation of slice support capabilities on a radio access network (radio access network, RAN) side is at a base station level, and a difference between internal resources of the base station is not fully used to support different slice service capabilities on the RAN side.

### SUMMARY

This application provides a communication method and a related apparatus, so that a difference between internal resources of a base station can be fully used to support different slice service capabilities on a RAN side.

According to a first aspect, an embodiment of the present invention provides a communication method. The method includes: A first distributed unit (Distributed Unit, DU) receives first information of a second CU from a first central unit (Central Unit, CU), where the first CU is a CU that has set up a connection to the first DU and that does not support a first slice, the first information of the second CU includes transport layer information of the second CU and an identifier or a name of the second CU, the second CU is a CU that supports the first slice, and the first slice is a network slice that user equipment UE expects to access. The first DU sets up a connection to the second CU based on the first information of the second CU.

It can be learned that in the communication method, the first DU may set up the connection to the second CU in time based on a capability of another CU, for example, the second CU, to support the first slice, to provide a service of the first slice for the UE. The communication method adapts to a network slice scenario in which a CU capability is differentiated and flexibly exposed, and can be used to select, based on the network slice that the UE expects to access, an appropriate CU to provide a service for the UE. This not only improves CU utilization and avoids a resource waste, but also reduces deployment and operation costs of an operator, to improve flexibility and coverage of providing a slice service for the UE.

In an optional implementation, during initial access or initial registration of the UE, when setting up the connection to the second CU, the first DU may further remove the connection to the first CU, to complete context setup of the UE based on the second CU.

In another optional implementation, when the UE has camped on a master node (Master Node, MN), before the first DU sets up the connection to the second CU, the MN further needs to add a secondary node (Secondary Node, SN) corresponding to the second CU. In this way, the first DU may be connected to both an MN CU and an SN CU to provide a service for the UE.

In an optional implementation, before that a first DU receives first information of a second CU from a first CU, the method further includes: The first DU sends second information to the first CU, where the second information indicates the first CU to select the second CU that supports the first slice.

In an optional implementation, the first DU receives third information from the first CU, where the third information includes slice information supported by the first CU. The first DU identifies, based on the third information, whether the first CU supports the first slice. When identifying that the first CU does not support the first slice, the first DU performs the step of sending second information to the first CU.

It can be learned that the first DU may identify, based on the network slice that the UE expects to access and the slice information supported by the first CU, whether the first CU needs to reselect an appropriate CU to support the first slice, to provide a service for the UE in time.

According to a second aspect, this application further provides a communication method. The communication method corresponds to the communication method according to the first aspect, and is described from a perspective of a first CU. The communication method includes: The first CU sends first information of a second CU to a first DU, where the first information of the second CU includes transport layer information of the second CU and an identifier or a name of the second CU, the first information of the second CU is used by the first DU to set up a connection to the second CU, the first CU is a CU that has set up a connection to the first DU and that does not support a first slice, the second CU is a CU that supports the first slice, and the first slice is a network slice that user equipment UE expects to access.

It can be learned that in the communication method, the first CU may send the first information of the second CU to the first DU in time, so that the first DU may set up the connection to the second CU based on the first information of the second CU, to provide a service of the first slice for the UE. The communication method adapts to a network slice scenario in which a CU capability is differentiated and flexibly exposed, and can be used to select, based on the network slice that the UE expects to access, an appropriate CU to provide a service for the UE. This not only improves CU utilization and avoids a resource waste, but also reduces deployment and operation costs of an operator, to improve flexibility and coverage of providing a slice service for the UE.

In an optional implementation, the first CU selects the second CU from a plurality of CUs that can support the first slice. Optionally, the first CU may select, based on an operator policy or a CU load status, the second CU from the plurality of CUs that support the first slice, to send the first information of the second CU to the first DU.

In an optional implementation, before that the first CU selects the second CU from a plurality of CUs that can support the first slice, the method further includes: The first CU receives second information from the first DU, where the second information indicates the first CU to select the second CU that supports the first slice.

In an optional implementation, before that the first CU receives second information from the first DU, the method further includes: The first CU sends third information to the first DU, where the third information includes slice information supported by the first CU, and the third information is used by the first DU to identify whether the first CU supports the first slice.

It can be learned that when identifying that the first CU does not support the first slice, the first DU may send the second information to the first CU in time, to trigger the first CU to reselect a CU, so as to provide a service for the UE in time.

In another optional implementation, when identifying, based on the slice information supported by the first CU, that the first CU does not support the first slice, the first CU selects the second CU from the plurality of CUs that support the first slice, and then performs the step of sending first information of a second CU to a first DU. It can be learned that in this implementation, when the UE initiates a slice service that is not supported by a current CU, the current CU can select the second CU that supports the first slice and trigger the first DU to set up the connection to the second CU, so as to provide a service for the UE.

In still another optional implementation, before that the first CU sends first information of a second CU to a first DU, the method further includes: The first CU receives the first information of the second CU from a core network device, where the first information of the second CU is sent by the core network device when the core network device identifies that the first CU does not support the first slice, and the second CU is selected by the core network device from a plurality of CUs that can support the first slice. It can be learned that in this implementation, the core network device identifies whether the first CU supports the first slice, and selects the second CU when the first CU does not support the first slice, to trigger a network device to set up the connection between the first DU and the second CU, so as to provide a service for the UE.

According to a third aspect, this application further provides a communication method. The communication method corresponds to the communication method according to the second aspect, and is described from a perspective of a core network device. In the communication method, when identifying that a first CU does not support a first slice, the core network device selects a second CU from a plurality of CUs that support the first slice. The core network device sends first information of the second CU to the first CU, where the first information of the second CU includes transport layer information of the second CU and an identifier or a name of the second CU, the first information of the second CU is used to set up a connection between a first DU and the second CU, the first DU is a DU that has set up a connection to the first CU, and the first slice is a network slice that user equipment UE expects to access.

It can be learned that in the communication method, when identifying that the first CU does not support the network slice that the UE expects to access, the core network device selects the second CU from the plurality of CUs that can support the first slice, to trigger, by using the first information of the second CU, the first DU to set up the connection to the second CU, so as to provide a service for the UE. The communication method adapts to a network slice scenario in which a CU capability is differentiated and flexibly exposed, and can be used to select, based on the network slice that the UE expects to access, an appropriate CU to provide a service for the UE. This not only improves CU utilization and avoids a resource waste, but also reduces deployment and operation costs of an operator, to improve flexibility and coverage of providing a slice service for the UE.

According to a fourth aspect, this application provides a communication method. The communication method is described from a perspective of a first CU. The communication method includes: The first central unit CU sends fourth information to a second central unit CU, where the fourth information indicates the second CU to update a connection between the first CU and a first DU to a connection between the first DU and the second CU, the first CU is a CU that has set up a connection to the first DU and that does not support a first slice, the second CU is a CU that supports the first slice, and the first slice is a network slice that user equipment UE expects to access.

It can be learned that in the communication method, the first CU may indicate the second CU to update the connection between the first DU and the first CU to the connection between the first DU and the second CU, to provide a service of the first slice for the UE. The communication method adapts to a network slice scenario in which a CU capability is differentiated and flexibly exposed, and can be used to select, based on the network slice that the UE expects to access, an appropriate CU to provide a service for the UE. This not only improves CU utilization and avoids a resource waste, but also reduces deployment and operation costs of an operator, to improve flexibility and coverage of providing a slice service for the UE.

In an optional implementation, before that the first CU sends fourth information to a first DU, the method further includes: The first CU selects the second CU from a plurality of CUs that can support the first slice. It can be learned that in this implementation, the first CU selects the second CU.

In an optional implementation, before that the first CU selects the second CU from a plurality of CUs that can support the first slice, the method further includes: The first CU receives second information from the first DU, where the second information indicates the first CU to select the second CU that supports the first slice. Optionally, before that the first CU receives second information from the first DU, the method further includes: The first CU sends third information to the first DU, where the third information includes slice information supported by the first CU, and the third information is used by the first DU to identify whether the first CU supports the first slice. In another optional implementation, the first CU identifies, based on slice information supported by the first CU, whether the first CU supports the first slice. When identifying that the first CU does not support the first slice, the first CU performs the step of selecting the second CU from a plurality of CUs that can support the first slice. It can be learned that in this implementation, when identifying that the first CU does not support the network slice that the UE expects to access, the first CU may trigger, in time, the second CU to redirect the connection between the first DU and the first CU, so as to provide a service for the UE through the connection between the first DU and the second CU.

In still another optional implementation, the first CU receives first information of the second CU or a base station identifier of the second CU from a core network device, where the second CU is selected by the core network device from a plurality of CUs that can support the first slice. The first CU performs, based on the first information of the second CU or the base station identifier of the second CU, the step of sending fourth information to a second CU. It can be learned that in this implementation, when identifying that a current CU does not support the network slice that the UE expects to access, the core network device may trigger the second CU to redirect the connection between the first DU and the first CU, so as to provide a service for the UE through the connection between the first DU and the second CU.

According to a fifth aspect, this application further provides a communication method. The communication method corresponds to the communication method according to the fourth aspect, and is described from a perspective of a first CU. The communication method includes: A second CU receives fourth information from the first CU, where the fourth information indicates the second CU to update a connection between the first CU and a first DU to a connection between the first DU and the second CU. The second CU updates, based on the fourth information, the connection between the first CU and the first DU to the connection between the first DU and the second CU, where the first CU is a CU that has set up a connection to the first DU and that does not support a first slice, the second CU is a CU that supports the first slice, and the first slice is a network slice that UE expects to access.

It can be learned that, when being triggered by the first CU, the second CU may change an end point of the connection between the first DU and the first CU to the second CU, to provide a service for the UE. The communication method adapts to a network slice scenario in which a CU capability is differentiated and flexibly exposed, and can be used to select, based on the network slice that the UE expects to access, an appropriate CU to provide a service for the UE. This not only improves CU utilization and avoids a resource waste, but also reduces deployment and operation costs of an operator, to improve flexibility and coverage of providing a slice service for the UE.

Optionally, that the second CU updates the connection between the first CU and the first DU to the connection between the first DU and the second CU may include: The second CU sends base station-central unit configuration update (gNB-CU Configuration Update) to the first DU. The second CU receives a base station-central unit configuration update acknowledgment (gNB-CU Configuration Update ACK) from the first DU. Therefore, the connection between the first DU and the first CU is updated to the connection between the first DU and the second CU.

According to a sixth aspect, this application further provides a communication method. The communication method corresponds to the communication methods according to the fourth aspect and the fifth aspect, and is described from a perspective of a core network device. The communication method includes: When identifying that a first CU does not support a first slice, the core network device selects a second CU from a plurality of CUs that support the first slice. The core network device sends first information of the second CU or a base station identifier of the second CU to the first CU, where the first information of the second CU includes transport layer information of the second CU and an identifier or a name of the second CU, the first information of the second CU or the base station identifier of the second CU is used to update a connection between a first DU and the first CU to a connection between the first DU and the second CU, the first DU is a DU that has set up a connection to the first CU, and the first slice is a network slice that UE expects to access.

It can be learned that in the communication method, when identifying that a current CU does not support the network slice that the UE expects to access, the core network device may select another CU in time, and trigger, through the current CU, a current DU to redirect to the another CU, to set up a connection between the current DU and the another CU that supports the network slice that the UE expects to access, so as to provide a service for the UE. The communication method adapts to a network slice scenario in which a CU capability is differentiated and flexibly exposed, and can be used to select, based on the network slice that the UE expects to access, an appropriate CU to provide a service for the UE. This not only improves CU utilization and avoids a resource waste, but also reduces deployment and operation costs of an operator, to improve flexibility and coverage of providing a slice service for the UE.

According to a seventh aspect, this application provides a communication apparatus. The communication apparatus may be an access network device, may be an apparatus, for example, a DU, in the access network device, or may be an apparatus that can be used together with the DU. The communication apparatus may alternatively be a chip system. The communication apparatus may perform the method according to the first aspect. A function of the communication apparatus may be implemented by hardware, or may be implemented by executing corresponding software by hardware. The hardware or the software includes one or more units or modules corresponding to the foregoing function. The unit or the module may be software and/or hardware. For an operation performed by the communication apparatus and beneficial effects, refer to the method and the beneficial effects in the first aspect.

According to an eighth aspect, this application provides a communication apparatus. The communication apparatus may be an access network device, may be an apparatus, for example, a CU, in the access network device, or may be an apparatus that can be used together with the CU. The communication apparatus may perform the method according to the second aspect, the third aspect, or the fourth aspect. A function of the communication apparatus may be implemented by hardware, or may be implemented by executing corresponding software by hardware. The hardware or the software includes one or more units or modules corresponding to the foregoing function. The unit or the module may be software and/or hardware. For an operation performed by the communication apparatus and beneficial effects, refer to the method and the beneficial effects in the second aspect, the third aspect, or the fourth aspect.

According to a ninth aspect, this application provides a communication apparatus. The communication apparatus may be a core network device, an apparatus in the core network device, or an apparatus that can be used together with the core network device. The communication apparatus may alternatively be a chip system. The communication apparatus may perform the method according to the third aspect or the sixth aspect. A function of the communication apparatus may be implemented by hardware, or may be implemented by executing corresponding software by hardware. The hardware or the software includes one or more units or modules corresponding to the foregoing function. The unit or the module may be software and/or hardware. For an operation performed by the communication apparatus and beneficial effects, refer to the method and the beneficial effects in the third aspect or the sixth aspect.

According to a tenth aspect, this application provides a baseband unit (baseband unit, BBU). The BBU may include the DU according to the seventh aspect and the CU according to the eighth aspect. For an operation performed by the communication apparatus and beneficial effects, refer to the method and the beneficial effects in the seventh aspect or the eighth aspect.

According to an eleventh aspect, this application provides a computer-readable storage medium. The storage medium stores instructions, and when the computer program or the instructions is/are executed by a communication apparatus, the method according to any one of the first aspect to the sixth aspect is implemented.

According to a twelfth aspect, this application provides a computer program product including instructions. When a communication apparatus reads and executes the instructions, the communication apparatus is enabled to perform the method according to any one of the first aspect to the sixth aspect.

According to a thirteenth aspect, this application provides a communication system, including at least one communication apparatus configured to perform the method according to the first aspect, at least one communication apparatus configured to perform the method according to the second aspect, and at least one communication apparatus configured to perform the method according to the third aspect, or including at least one communication apparatus configured to perform the method according to the fourth aspect, at least one communication apparatus configured to perform the method according to the fifth aspect, and at least one communication apparatus configured to perform the method according to the sixth aspect.

### BRIEF DESCRIPTION OF DRAWINGS

FIG. 1 is a diagram of a structure of a communication system according to an embodiment of this application;
FIG. 2 is a schematic flowchart of a communication method 100 according to an embodiment of this application;
FIG. 3 is a schematic flowchart of a communication method 101 according to an embodiment of this application;
FIG. 4 is a schematic flowchart of a communication method 102 according to an embodiment of this application;
FIG. 5 is a schematic flowchart of a communication method 103 according to an embodiment of this application;
FIG. 6 is a schematic flowchart of a communication method 200 according to an embodiment of this application;
FIG. 7 is a schematic flowchart of a communication method 201 according to an embodiment of this application;
FIG. 8 is a schematic flowchart of a communication method 202 according to an embodiment of this application;
FIG. 9 is a schematic flowchart of a communication method 203 according to an embodiment of this application;
FIG. 10 is a diagram of a structure of a communication apparatus according to an embodiment of this application; and
FIG. 11 is another diagram of a structure of a communication apparatus according to an embodiment of this application.

### DESCRIPTION OF EMBODIMENTS

The following describes specific embodiments of this application in detail with reference to the accompanying drawings.

This application may be applied to standalone communication systems such as a new base station, a backhaul link, and a core network that are deployed in a future network, or may be applied to various non-standalone communication systems.

For example, the technical solutions of this application may be applied to a fifth generation (5th generation, 5G) system, which may also be referred to as a new radio (new radio, NR) system, a sixth generation (6th generation, 6G) system, a seventh generation (7th generation, 7G) system, or another future communication system; or may be applied to a device to device (device to device, D2D) system, a machine to machine (machine to machine, M2M) system, a long term evolution (long term evolution, LTE) system, a carrier aggregation (carrier aggregation, CA) system, and a dual connectivity technology (Dual Connectivity, DC) system.

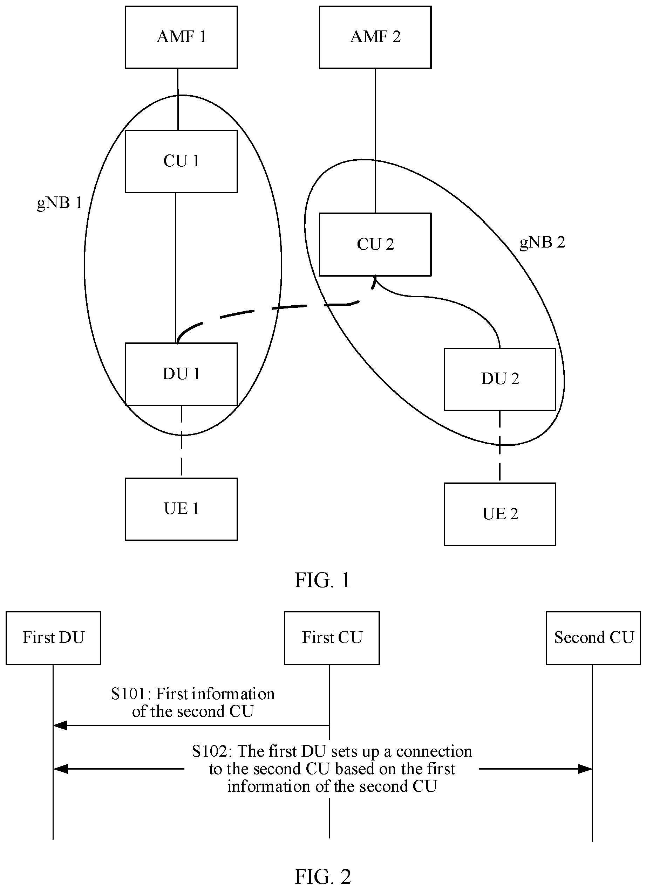

A communication method described in this application may be applied to, for example, but not limited to, a communication system shown in FIG. 1. FIG. 1 is a diagram of a scenario of the communication system according to an embodiment of this application. An example in which the communication system is an NR system, a network device is a gNB, and a core network device is an access and mobility management function (access and mobility management function, AMF) network element is used. The gNB may include a central unit (central unit, CU), a distributed unit (distributed unit, DU), and the like. As shown in FIG. 1, a gNB 1 includes a CU 1 and a DU 1, and is connected to an AMF 1. A gNB 2 includes a CU 2 and a DU 2, and is connected to an AMF 2. UE 1 accesses a cell covered by the DU 1, and UE 2 accesses a cell covered by the DU 2. When the UE 1 initiates, through the DU 1, a slice service that is not supported by the CU 1 but supported by the CU 2, the DU 1 may set up a connection to the CU 2 based on transport layer information of the CU 2, an identifier or a name of the CU 2, and the like. Alternatively, the CU 2 may update a connection between the CU 1 and the DU 1 to a connection between the CU 2 and the DU 1, to improve flexibility and a coverage capability of providing a slice service for the UE through flexible CU selection.

The UE is a device having a wireless transceiver function. The UE may be deployed on land, including an indoor or outdoor device, a handheld device, a wearable device, or a vehicle-mounted device; may be deployed on a water surface (for example, on a ship); or may be deployed in the air (for example, on an airplane, a balloon, or a satellite). The UE may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a wearable terminal device, or the like. The UE sometimes may also be referred to as a terminal, a terminal device, an access terminal device, a vehicle-mounted terminal, an industrial control terminal, a UE unit, a UE station, a mobile station, a remote station, a remote terminal device, a mobile device, a UE agent, a UE apparatus, or the like. The UE may alternatively be fixed or mobile.

The network device may be a device having a wireless transceiver function or a chip that may be disposed in the device. The network device includes but is not limited to: an evolved NodeB (evolved NodeB, eNB), a radio network controller (radio network controller, RNC), a NodeB (NodeB, NB), a network device controller (base station controller, BSC), a network device transceiver station (base transceiver station, BTS), a home network device (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission reception point (transmission reception point, TRP), a transmission point (transmission point, TP), and the like; may be a device used in a 5G, 6G, or even 7G system, for example, a gNB or a transmission point (TRP or TP) in an NR system, or one antenna panel or a group of antenna panels (including a plurality of antenna panels) of a network device in a 5G system; or may be a network node that forms a gNB or a transmission point, for example, a baseband unit (BBU), a distributed unit (distributed unit, DU), or a road side unit (road side unit, RSU) in vehicle to everything (vehicle to everything, V2X) or in an intelligent driving scenario.

In some deployments, the gNB or the transmission point may include a central unit (central unit, CU), a DU, and the like. The gNB or the transmission point may further include a radio frequency unit (radio unit, RU). The CU implements some functions of the gNB or the transmission point, and the DU implements some functions of the gNB or the transmission point. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually converted into information at the physical layer or is transformed from information at the physical layer. Therefore, in such an architecture, it may be considered that higher layer signaling such as RRC layer signaling or PDCP layer signaling is sent by the DU or is sent by the DU and the RU. It may be understood that the network device may be a CU node, a DU node, or a device including a CU node and a DU node.

In addition, the CU may be classified into a network device in a radio access network (radio access network, RAN), namely, an access network device, or the CU may be classified into a network device in a core network (core network, CN), referred to as a core network device for short. This is not limited herein.

The core network is responsible for maintaining subscription data of a mobile network, and provides session management, mobility management, policy management, security authentication, and other functions for the UE. The core network may include the following network elements: a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (or referred to as a network exposure function) (network exposure function, NEF) network element, a network function repository function (NF repository function, NRF) network element, a policy control function (policy control function, PCF) network element, a unified data management (unified data management, UDM) network element, a unified data repository (unified data repository, UDR) network element, a location management function (location management function, LMF) network element, a gateway mobile location center (home gateway mobile location center, HGMLC) network element, a visited gateway mobile location center (visited gateway mobile location center, VGMLC) network element, and an application function (application function, AF) network element.

The AMF network element is mainly responsible for mobility management in the mobile network, such as user location update, user network registration, and user switching. The SMF network element is mainly responsible for session management in the mobile network, such as session setup, modification, and release. A specific function is, for example, allocating an internet protocol (internet protocol, IP) address to a user, or selecting a UPF that provides a packet forwarding function. The UPF network element is mainly responsible for forwarding and receiving user data, and may receive user data from a data network, and transmit the user data to the UE through the access network device; or may receive user data from the UE through the access network device, and forward the user data to the data network. The PCF network element mainly supports providing a unified policy framework to control network behavior, and providing a policy rule for a control layer network function, and is responsible for obtaining user subscription information related to policy decision-making. The PCF network element may provide a policy, for example, a quality of service (quality of service, QoS) policy or a slice selection policy, for the AMF network element and the SMF network element. The AUSF network element is configured to perform UE security authentication. The NSSF network element is configured to select a network slice for the UE. The NEF network element is mainly configured to support capability and event exposure. The UDM/LTDR network element is configured to store user data, for example, subscription data and authentication/authorization data. The AF network element mainly supports interacting with a 3GPP core network to provide a service, for example, affecting data routing decision-making and a policy control function, or providing some third-party services for a network side.

For ease of clearly describing the technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference either. The term "and/or" describes an association relationship between associated objects, and indicates that three relationships may exist. For example, A and/or B may indicate the following three cases: Only A exists, both A and B exist, and only B exists. The character "/" usually indicates an "or" relationship between the associated objects.

First, related concepts in this application are described.

### 1. CU and DU

A communication method described in this application is described from a perspective of a CU and a DU in a network device. A first DU is a DU in a gNB initially accessed by UE or a DU in a master node (Master Node, MN) on which the UE has camped. A first CU is a CU selected by the first DU and has set up a connection to the first DU. A second CU is a CU that is reselected when the first CU does not support a first slice and that supports the first slice. In this specification, the first slice is a network slice that the user equipment expects to access.

In embodiments of this application, for a CU that is selected for the network slice and that is connected to the DU, a dedicated network function may be extended to a RAN side, to optimize cross-service coverage and performance. For example, CU selection for the network slice may have, but is not limited to, the following advantages:
(1) Dedicated CN functions are extended to the RAN side: Differentiated CU functions are allowed, to support different performance requirements across services.
(2) Dedicated CUs are deployed for different services: Different CU functions may be supported at each location. For example, a URLLC slice service is extremely sensitive to latency and may require an edge CU to provide services, while a deeper CU needs to be selected for an eMBB slice service to reduce deployment costs.
(3) CU differentiation is implemented and deployed: The CU can be selected based on network slice information and differentiated functions, processing capabilities, locations, and the like.

### 2. Network slice

Network slices are a plurality of logical subnets having different features and isolated from each other are virtualized on a same set of physical infrastructures through flexible allocation of network resources and on-demand networking, to provide a service for a user in a targeted manner. These logical subnets are identified and distinguished by using single network slice selection assistance information (Single Network Slice Selection Assistance Information, S-NSSAI). Slice information supported by each CU may include but is not limited to the following information:
(1) a slice/service type (Slice/service type, SST), indicating a specific feature and a service type of the network slice; and
(2) a slice differentiator (Slice Differentiator, SD), used as a supplement to the SST, to further distinguish between a plurality of network slice instances that satisfy a same SST, where the SD is optional.

For ease of description, in this application, a network slice that a terminal device expects to access is referred to as an intended slice. The intended slice varies with terminal device behavior. For example, in a cell reselection or selection process, the intended slice(s) is allowed/requested S-NSSAI(s); in an initial registration process, the intended slice(s) is requested S-NSSAI(s), that is, the intended slice(s) = requested S-NSSAI(s); in an idle state, the intended slice(s) = allowed S-NSSAI(s); for a terminal device in an inactive state, the intended slice(s) = suspended S-NSSAI(s), namely, S-NSSAI(s) related to an activated PDU session of the terminal device in the inactive state; and for a mobile originated (Mobile Original, MO) service, the intended slice is S-NSSAI related to the MO service.

To fully use a difference between internal resources of a base station to support different slice service capabilities on the RAN side, in the communication method in embodiments of this application, differentiation of slice support capabilities is at a CU level. The following separately describes embodiments of this application by using a communication method 100 and a communication method 200 as examples.

In the communication method 100, when a first DU sets up a connection to a first CU but the first CU does not support a first slice, and a second CU supports the first slice, the first DU sets up a connection to the second CU based on slice information and transport layer information that are supported by the second CU. Therefore, a capability of a base station to support the first slice is implemented.

In the communication method 200, when a first DU sets up a connection to a first CU, but the first CU does not support a first slice, and a second CU supports the first slice, the first CU indicates the second CU to update the connection between the first CU and the first DU to a connection between the second CU and the first DU. Therefore, a capability of a base station to support the first slice is implemented.

The following further describes the communication method 100 and the communication method 200 with reference to the accompanying drawings.

FIG. 2 is a schematic flowchart of the communication method 100 according to an embodiment of this application. The communication method 100 shown in FIG. 2 is described from a perspective of interaction between the first CU, the first DU, and the second CU. As shown in FIG. 2, the communication method 100 includes but is not limited to the following steps.

S101: The first CU sends first information of the second CU to the first DU, and correspondingly, the first DU receives the first information of the second CU from the first CU.

The second CU is a CU that supports a first slice, and the first information of the second CU includes transport layer information of the second CU and an identifier or a name of the second CU. Optionally, the transport layer information may be control plane transport layer information (CP Transport Layer Information), and provides F1 control plane transport layer information of a connection between a gNB-CU and a gNB-DU, so that the first CU sets up a connection to the second CU.

Optionally, the first information of the second CU in step S101 may be sent to the first DU by using a base station-distributed unit configuration update acknowledgment (gNB-DU Configuration Update ACK) message or a base station-central unit configuration update (gNB-CU Configuration Update) message. Alternatively, the first information of the second CU may be sent to the first DU by using downlink radio resource control message transfer (DL RRC Message Transfer).

In an optional implementation, the communication method 100 is applied to a case in which UE camps on an MN. In this case, the MN already has a context of the UE, the first CU is an MN CU, and the first DU is an MN DU. Therefore, the second CU that supports the first slice may be selected as a secondary node (Secondary Node, SN) CU. In this way, before the MN CU sends first information of the SN CU to the MN DU in step S101, the MN further needs to initiate an SN addition request (Addition Request) to a base station to which the SN CU belongs, to trigger an SN addition procedure. In other words, after the MN determines to add an SN, step S101 is performed. The MN CU may forward radio resource control reconfiguration (RRC Reconfiguration) to the UE through the MN DU, and the UE may perform a random access procedure on an SN side based on a parameter of the RRC reconfiguration.

S 102: The first DU sets up a connection to the second CU based on the first information of the second CU.

Optionally, the first DU may initiate an F1 setup request (F1 Setup Request) to the second CU based on the F1 control plane transport layer information of the second CU. Correspondingly, the second CU returns an F 1 setup request response (F1 Setup Request Response) message to the first DU. Therefore, the first DU sets up the connection to the second CU.

In an optional implementation, when setting up the connection to the second CU based on the first information of the second CU, the first DU further needs to remove a connection to the first CU. For example, during initial access of the UE, after an F1 interface between the first DU and the second CU is set up to form a new gNB, the first DU may remove an F 1 interface between the first DU and the first CU. The first DU sends a removal request (Removal Request) to the first CU. The first CU sends a removal request response (Removal Request Response) to the first DU. Therefore, the first DU removes the connection to the first CU, or the first CU removes the connection to the first DU.

In another optional implementation, when the first DU sets up the connection to the second CU based on the first information of the second CU, the first CU may remove a connection to the first DU. For example, during initial access of the UE, after an F1 interface between the first DU and the second CU is set up to form a new gNB, the first CU may remove an F 1 interface between the first CU and the first DU. The first CU sends a removal request to the first DU. The first DU sends a removal request response to the first CU. Therefore, the F1 interface between the first CU and the first DU is removed.

In still another optional implementation, when setting up the connection to the second CU based on the first information of the second CU, the first DU further maintains a connection to the first CU. For example, in a phase in which the UE camps on the MN and the context already exists, the MN DU and the SN CU complete setup of an F1 interface, and an F1 interface between the MN DU and the MN CU is further stored. In other words, in this embodiment of this application, one DU can be connected to two CUs at the same time.

In this implementation, the UE sets up an RRC connection to the SN CU through the MN DU, and sends, to an AMF network element, an initial UE message (initial UE Message) that carries a registration request, to complete context setup. It can be learned that in the dual connectivity architecture, RRC message transmission also exists between the UE and the SN. Therefore, the MN DU may belong to both a master cell group (Master Cell Group, MCG) and a secondary cell group (Secondary Cell Group, SCG). It can be learned that, in this implementation, a problem that a DU cannot be connected to both an MN CU and an SN CU in a conventional dual connectivity architecture is resolved. In this way, MN service continuity is ensured, and flexible exposure of a differentiated capability of a CU is implemented based on dual connectivity.

It can be learned that in the communication method 100, when the first CU does not support the first slice, the first DU may provide a corresponding service for the UE based on a capability of another CU to support a network slice. This makes full use of a difference between internal resources of the base station to support different slice service capabilities on a RAN side.

In addition, for the communication method 100, this embodiment of this application further provides an optional implementation of how to identify or perceive that the first CU does not support the first slice. The optional implementation includes but is not limited to: In an optional implementation, the first DU may identify, based on slice information supported by the first CU, whether the first CU supports the first slice.

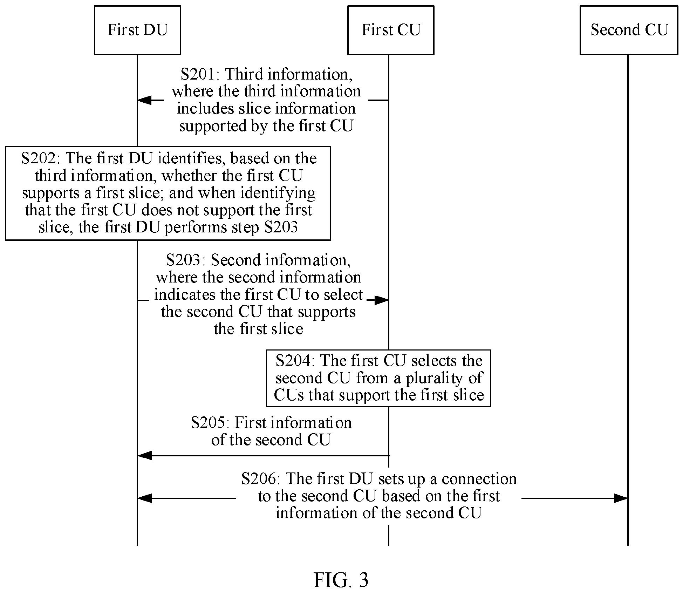

FIG. 3 is a schematic flowchart of a communication method 101 according to an embodiment of this application. Compared with the communication method 100, in the communication method 101, a first DU identifies or perceives whether a first CU supports a first slice. In this way, when the first CU does not support the first slice, the first CU may select a second CU that supports the first slice, to perform operations of steps S101 and S102. The communication method 101 shown in FIG. 3 includes but is not limited to the following steps.

S201: The first CU sends third information to the first DU, and correspondingly, the first DU receives the third information from the first CU, where the third information includes slice information supported by the first CU.

Optionally, the third information may be a supported slice list (Supported Slice List) information element of the first CU, to carry a capability of the first CU to support a slice. For example, content of a Supported Slice List information element shown in Table 1 may include an S-NSSAI list, and the S-NSSAI list may include S-NSSAI.

**Table 1 Supported Slice List information element**

| IE/Group Name |
|---|
| Supported Slice List |
| >S-NSSAI List |
| >>S-NSSAI |

In an optional implementation, before the first CU sends the third information to the first DU, the first DU may randomly select a CU (namely, the first CU), and the first DU sends an F1 setup request (F1 Setup Request) message to the first CU. The F1 setup request message carries, by using a tracking area identity slice support list (Tracking Area Identity Slice Support List, TAI Slice Support List) information element, the capability of the first DU to support the slice, that is, a slice supported by the first DU. Correspondingly, the third information in step S201 may be carried in an F1 setup request response (F1 Setup Request Response) message, and is sent by the first CU to the first DU. For example, the first DU supports a slice 1, a slice 2, and a slice 3, and the first CU supports the slice 1 and the slice 2. In this case, the first DU and the first CU may form an initial base station (Initial gNB).

S202: The first DU identifies, based on the third information, whether the first CU supports a first slice; and when identifying that the first CU does not support the first slice, the first DU performs step S203; or when identifying that the first CU supports a first slice, the first DU performs an operation of transparently transmitting a UE registration request to a core network.

In an optional implementation, before step S202, after completing setup of an RRC connection to the initial gNB, UE may send, to the first DU, a network slice that the UE expects to access, for example, requested NSSAI = slice 3 carried in an RRC message. In this way, in step S202, the first DU identifies, based on the third information, whether the first CU supports the first slice. For example, the first slice is the slice 3. The first DU may identify that the first CU does not support the slice 3, and therefore perform step S203.

S203: The first DU sends second information to the first CU, and correspondingly, the first CU receives the second information, where the second information indicates the first CU to select a second CU that supports the first slice.

Optionally, the second information may be a discovery indication (Discovery Indication) information element, to indicate that the first CU does not support the first slice, and the first CU needs to re-search for an appropriate CU to provide a service of the first slice. In other words, the Discovery Indication information element indicates the first CU to select the second CU that supports the first slice. The Discovery Indication information element is an optional information element in signaling. Once the signaling includes the Discovery Indication information element, it indicates that the first CU needs to re-search for an appropriate CU, and slice information that is not supported by the first CU, for example, the first slice, namely, the slice 3 in the example is further carried.

For example, a Discovery Indication information element shown in Table 2 carries a non-supported slice list (Non-supported Slice List). The non-supported slice list includes an S-NSSAI list, and the S-NSSAI list includes S-NSSAI.

**Table 2 Discovery Indication information element**

| IE/Group Name |
|---|
| Non-supported Slice List |
| >S-NSSAI List |
| >>S-NSSAI |

In an optional implementation, the second information may be sent by the first DU to the first CU by using a gNB-DU configuration update message, or may be sent by the first DU to the first CU by using uplink radio resource control message transfer (UL RRC Message Transfer).

S204: The first CU selects the second CU from a plurality of CUs that support the first slice.

Optionally, the first CU may select, based on an operator policy or a CU load status, the second CU from neighboring CUs that can support the first slice.

In an optional implementation, the first CU may obtain, by using a dedicated CU information list (Dedicated CU Information List) information element, slice information supported by each neighboring CU. Optionally, another CU may report a Dedicated CU Information List information element of the another CU to the first CU. As shown in Table 3, the Dedicated CU Information List information element includes a dedicated CU information item (Dedicated CU Information Item), and the item includes a supported slice list (Supported Slice List), control plane transport layer information (CP Transport Layer Information), and the like.

As described above, the CP transport layer information provides F1 control plane transport layer information of a connection between a gNB-CU and a gNB-DU, so that the DU sets up a connection to the CU. Details are not described herein.

**Table 3 Dedicated CU Information List information element**

| Information element (information element, IE)/Group name (Group Name) |
|---|
| Dedicated CU Information List |
| >Dedicated CU Information Item |
| >>Supported Slice List |
| >>CP Transport Layer Information |

When the communication method 101 is applied to a case in which the UE has camped on an MN, the second CU may be an SN CU. To be specific, as described in the communication method 100, the MN further needs to initiate an SN addition request to a gNB to which the SN CU belongs, to trigger an SN addition procedure. Details are not described herein.

S205: The first CU sends first information of the second CU to the first DU, and correspondingly, the first DU receives the first information of the second CU.

S206: The first DU sets up a connection to the second CU based on the first information of the second CU.

For related descriptions of steps S205 and S206, refer to steps S101 and S102 in the communication method 100. Details are not described herein again.

It can be learned that in the communication method 101, when identifying, based on the slice information supported by the first CU, that the first CU does not support the first slice, the first DU may send the second information to the first CU in time, to indicate the first CU to select the second CU that supports the first slice. Further, the first CU sends the first information of the second CU to the first DU, and the first DU may set up the connection to the second CU based on the first information of the second CU. A capability to support the first slice is implemented through flexible CU selection, to improve flexibility and a coverage capability of a slice service.

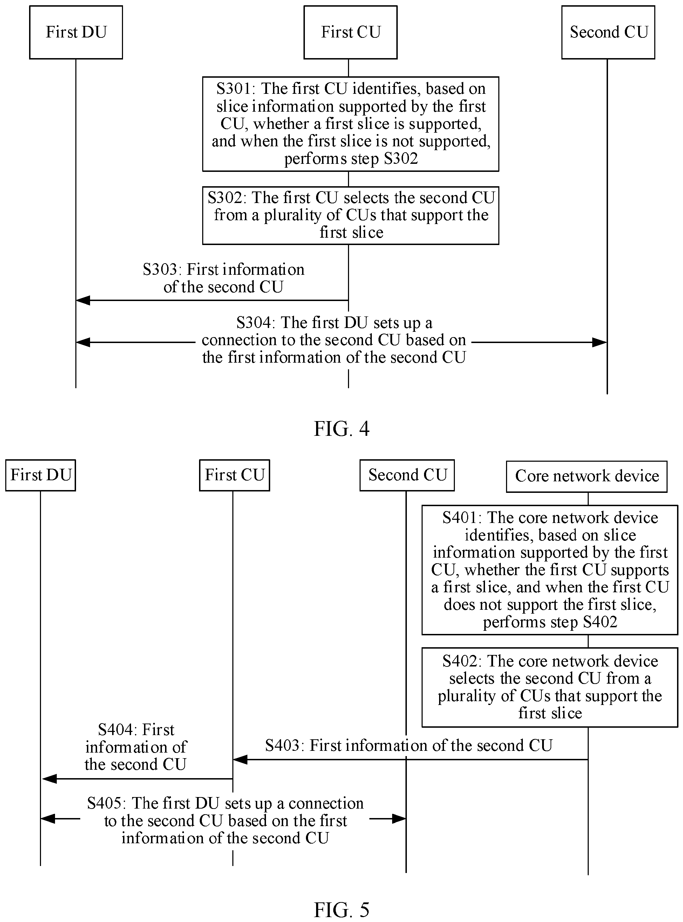

FIG. 4 is a schematic flowchart of a communication method 102 according to an embodiment of this application. Compared with the communication method 100, in the communication method 102, a first CU identifies or perceives whether the first CU supports a first slice. In this way, when the first CU does not support the first slice, the first CU may select a second CU that supports the first slice, to perform operations of steps S101 and S102. The communication method 102 shown in FIG. 4 includes but is not limited to the following steps.

S301: The first CU identifies, based on slice information supported by the first CU, whether a first slice is supported, and when the first slice is not supported, performs step S302, or when the first slice is supported, performs an operation of transparently transmitting a UE registration request to a core network.

Optionally, after UE sends requested NSSAI to a first DU by using an RRC message, the first DU may forward the requested NSSAI to the first CU by using UL RRC message transfer. In this way, the first CU may determine, based on the slice information supported by the first CU, that the first slice is not supported.

S302: The first CU selects a second CU from a plurality of CUs that support the first slice.

S303: The first CU sends first information of the second CU to the first DU, and correspondingly, the first DU receives the first information of the second CU.

S304: The first DU sets up a connection to the second CU based on the first information of the second CU.

For related descriptions of steps S302 to S304, refer to steps S101 and S102 in the communication method 100 or steps S204 to S206 in the communication method 101. Details are not described herein again.

It can be learned that in the communication method 102, when identifying that the first CU does not support the first slice, the first CU may select the second CU that supports the first slice. Further, the first CU sends the first information of the second CU to the first DU, and the first DU may set up the connection to the second CU based on the first information of the second CU. A capability to support the first slice is implemented through flexible CU selection, to improve flexibility and a coverage capability of a slice service.

In addition, in the communication method 101 or the communication method 102, in an optional implementation, as described above, the first CU may obtain, through an Xn interface, slice information supported by each neighboring CU, to select the second CU. In another optional implementation, the first CU may obtain information about each neighboring CU from a core network side, and then select the second CU with reference to information obtained through an Xn interface. In still another optional implementation, information about each neighboring CU, for example, slice information supported by each neighboring CU, may be obtained from a core network side, so that the first CU selects the second CU.

FIG. 5 is a schematic flowchart of a communication method 103 according to an embodiment of this application. Compared with the communication method 100, in the communication method 103, a core network device identifies or perceives whether a first CU supports a first slice. In this way, when the first CU does not support the first slice, the core network device may select a second CU that supports the first slice, and send first information of the second CU to the first CU, to perform operations of steps S101 and S102. The communication method 103 shown in FIG. 5 includes but is not limited to the following steps.

S401: The core network device identifies, based on slice information supported by the first CU, whether the first CU supports a first slice, and when the first CU does not support the first slice, performs step S402, or when both the core network and the first CU support the first slice, an operation of transparently transmitting a UE registration request to the core network is performed.

Optionally, after UE sends requested NSSAI to a first DU by using an RRC message, the first DU may forward the requested NSSAI to the first CU by using UL RRC message transfer. The first CU (an initial gNB) may transparently transmit the UE registration request to the core network device by using an initial UE message (Initial UE Message), where the registration request includes the requested NSSAI. In addition, the core network device may obtain, through NG interaction, a capability of a CU in a connected base station to support a slice, so that the core network device may identify, based on the slice information supported by the first CU, that the first CU does not support the requested NSSAI.

S402: The core network device selects a second CU from a plurality of CUs that support the first slice.

S403: The core network device sends first information of the second CU to the first CU, and correspondingly, the first CU receives the first information of the second CU.

The first information of the second CU includes transport layer information of the second CU and an identifier or a name of the second CU, as described in the foregoing communication methods. Details are not described herein again. The core network device may send the first information of the second CU to the first CU by using AMF configuration update (AMF Configuration Update).

S404: The first CU sends the first information of the second CU to the first DU, and correspondingly, the first DU receives the first information of the second CU.

S405: The first DU sets up a connection to the second CU based on the first information of the second CU.

For related descriptions of steps S404 and S405, refer to steps S101 and S102 in the communication method 100 or steps S205 and S206 in the communication method 101. Details are not described herein again.

It can be learned that in the communication method 103, when identifying that the first CU does not support the first slice, the core network device may select the second CU that supports the first slice. In this way, the core network device sends, through the first CU, the first information of the second CU to the first DU, and the first DU may set up the connection to the second CU based on the first information of the second CU. A capability to support the first slice is implemented through flexible CU selection, to improve flexibility and a coverage capability of a slice service.

The communication method 101 to the communication method 103 are one or more embodiments related to the communication method 100, but the communication method 100 is not limited to these embodiments. Optionally, in still another embodiment, both the first CU and the first DU can identify whether the first CU supports the first slice. This is not limited in this application. It can be learned that in the foregoing communication methods, when the first CU does not support the first slice, the first DU sets up the connection to the second CU based on the first information of the second CU, to implement a capability of supporting the first slice. This improves flexibility and a coverage capability of a slice service.

The following further describes the communication method 200.

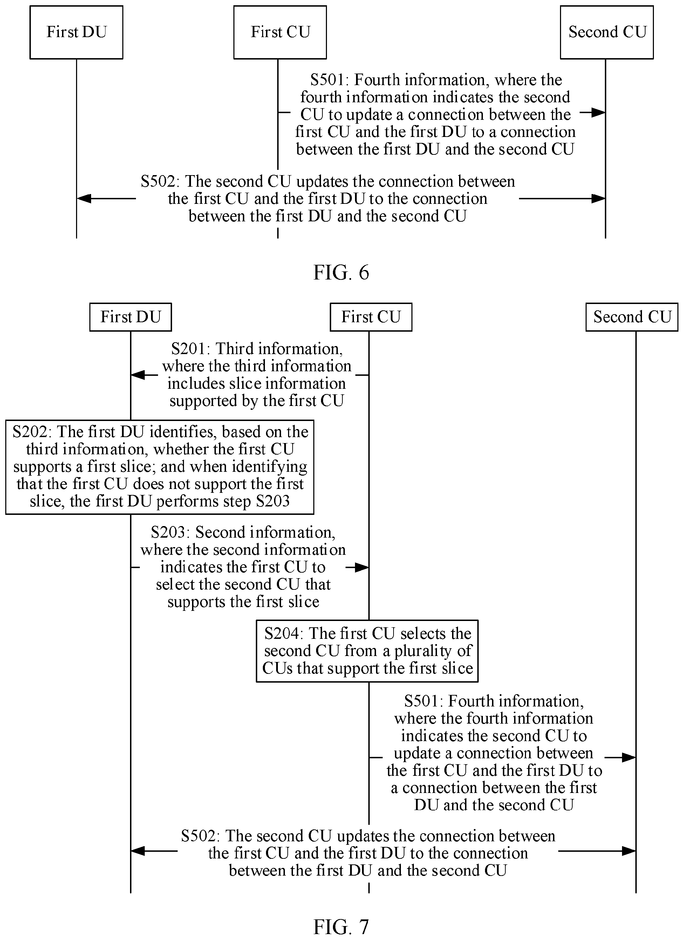

FIG. 6 is a schematic flowchart of the communication method 200 according to an embodiment of this application. As described above, a difference between the communication method 200 and the communication method 100 lies in that when the first CU does not support the first slice, the first CU indicates the second CU to update the connection between the first CU and the first DU to the connection between the second CU and the first DU. As shown in FIG. 6, the communication method 200 includes but is not limited to the following steps.

S501: The first CU sends fourth information to the second CU, and correspondingly, the second CU receives the fourth information from the first CU.

The fourth information indicates the second CU to update a connection between the first CU and the first DU to a connection between the first DU and the second CU. Optionally, the fourth information may be a redirection indication (Redirection Indication) information element, to indicate the second CU to change the first CU on an F1 interface to the second CU. As shown in Table 4, the Redirection Indication information element includes related information of the first DU, for example, related information of a DU when the F1 interface is set up. The Redirection Indication information element is an optional information element in signaling. When the Redirection Indication information element exists in the signaling, it indicates that the second CU needs to change the original first CU on the F1 interface to the second CU. In addition, the Redirection Indication information element further carries related information of the first DU when the F1 interface is set up.

**Table 4 Redirection Indication information element**

| IE/Group Name |
|---|
| DU Information |

S502: The second CU updates the connection between the first CU and the first DU to the connection between the first DU and the second CU.

Optionally, step S502 may include: The second CU may perform F1 interface update on the first DU by using gNB-CU configuration update. For example, the second CU sends the gNB-CU configuration update to the first DU, and the first DU sends a gNB-CU configuration update ACK to the second CU, to complete the F1 interface update. In this way, an access network device is also updated from an initial gNB to a target gNB. In addition, UE sets up an RRC connection to the target gNB, and sends, to a core network device, an initial UE message that carries a registration request, to complete context setup.

In an optional implementation, the communication method 200 corresponds to the communication method 101. To be specific, in the communication method 201, for example, the communication method 201 shown in FIG. 7, before step S501, the first DU may perform content described in steps S201 to S204 in FIG. 3. To be specific, when identifying, based on the slice information supported by the first CU, that the first CU does not support the first slice, the first DU can trigger the first CU to select the second CU from the plurality of CUs that support the first slice, and then the first CU may perform steps S501 and S502. In addition, for related content of this implementation, refer to the communication method 101. Details are not described herein again.

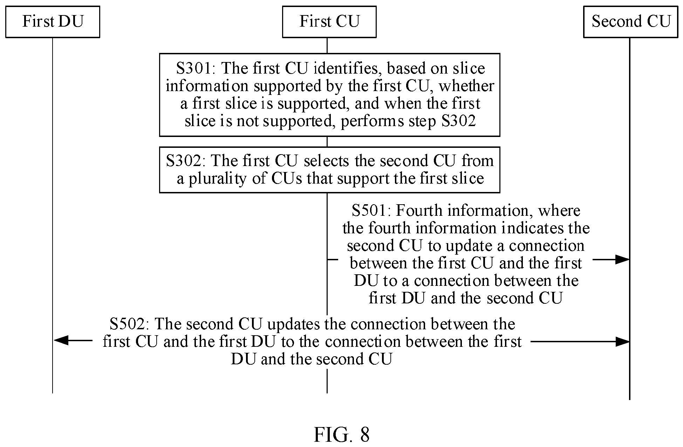

In an optional implementation, the communication method 200 corresponds to the communication method 102. To be specific, in a communication method 202, for example, a communication method 202 shown in FIG. 8, before step S501, the first CU may perform content described in steps S301 and S302 in FIG. 4. To be specific, when identifying, based on the slice information supported by the first CU, that the first CU does not support the first slice, the first CU may select the second CU from the plurality of CUs that can support the first slice, and then send the fourth information to the second CU. In addition, for related content of this implementation, refer to the communication method 102. Details are not described herein again.

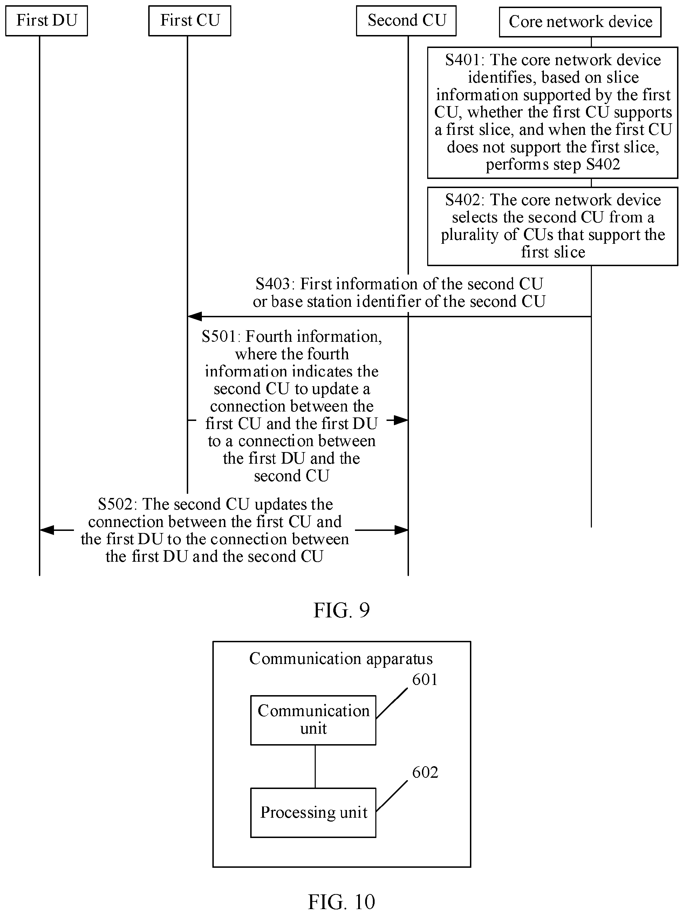

In another optional implementation, the communication method 200 corresponds to the communication method 103. To be specific, in a communication method 203, for example, a communication method 203 shown in FIG. 9, before step S501, the core network device may perform content described in steps S401 to S403 in FIG. 5. To be specific, when identifying, based on slice information supported by the core network device, that the first slice is not supported, the core network device selects the second CU from the plurality of CUs that can support the first slice, and then sends the first information of the second CU or a base station identifier of the second CU to the first CU. The first CU may identify the second CU based on the first information of the second CU or the base station identifier of the second CU, to send the fourth information to the second CU. The core network device may send the first information of the second CU or the base station identifier of the second CU to the first CU by using AMF configuration update (AMF Configuration Update). In addition, for related content of this implementation, refer to the communication method 103. Details are not described herein again.

In the foregoing embodiments, descriptions of embodiments have respective focuses. To avoid redundancy, for a part that is not described in detail in an embodiment, refer to related descriptions in other embodiments. In addition, a combination layout of various implementations and optional implementations of other content includes but is not limited to the foregoing embodiments.

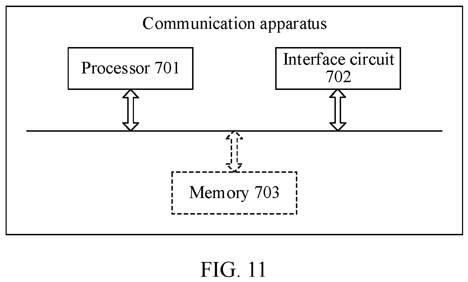

To implement functions of any one of the communication methods provided in embodiments of this application, the access network device, the user equipment, or the core network device may each include a hardware structure and a software module, and implement the foregoing functions in a form of the hardware structure, the software module, or a combination of the hardware structure and the software module. One of the foregoing functions may be performed through the hardware structure, the software module, or the combination of the hardware structure and the software module. FIG. 10 and FIG. 11 are diagrams of structures of possible communication apparatuses according to embodiments of this application. The communication apparatuses may be configured to implement functions of the terminal device or the network device in the foregoing method embodiments. Therefore, beneficial effects of the foregoing method embodiments can also be achieved.

The communication apparatus shown in FIG. 10 may include a communication unit 601 and a processing unit 602. The communication unit 601 may include a sending unit and a receiving unit. The sending unit is configured to implement a sending function, and the receiving unit is configured to implement a receiving function. The communication unit 601 may implement the sending function and/or the receiving function. The communication unit may alternatively be described as a transceiver unit.

The communication apparatus shown in FIG. 10 may be an access network device, may be an apparatus, for example, a DU, in the access network device, or may be an apparatus having a DU function.

In an implementation, the communication apparatus may implement related operations of the first DU in the foregoing communication method. The communication unit 601 is configured to receive first information of a second CU from a first central unit CU. The first CU is a CU that has set up a connection to the first DU and does not support a first slice. The first information of the second CU includes transport layer information of the second CU and an identifier or a name of the second CU. The second CU is a CU that supports the first slice. The first slice is a network slice that user equipment UE expects to access. The processing unit 602 is configured to set up a connection to the second CU based on the first information of the second CU.

For more detailed descriptions of the processing unit 602 and the communication unit 601, refer to related descriptions in the foregoing method embodiments.

The communication apparatus shown in FIG. 10 may be an access network device, may be an apparatus, for example, a CU, in the access network device, or may be an apparatus having a CU function.

In an implementation, the communication apparatus may implement related operations of the first CU in the foregoing communication method. The communication unit 601 is configured to send first information of a second CU to a first distributed unit DU. The first information of the second CU includes transport layer information of the second CU and an identifier or a name of the second CU. The first information of the second CU is used by the first DU to set up a connection to the second CU. The first CU is a CU that has set up a connection to the first DU and that does not support a first slice. The second CU is a CU that supports the first slice. The first slice is a network slice that user equipment UE expects to access.

For more detailed descriptions of the processing unit 602 and the communication unit 601, refer to related descriptions in the foregoing method embodiments.

In another implementation, the communication apparatus may implement related operations of the second CU in the foregoing communication method. The communication unit 601 is configured to receive fourth information from a first CU. The fourth information indicates the second CU to update a connection between the first CU and a first DU to a connection between the first DU and the second CU. The processing unit 602 is configured to update, based on the fourth information, the connection between the first CU and the first DU to the connection between the first DU and the second CU. The first CU is a CU that has set up a connection to the first DU and that does not support a first slice. The second CU is a CU that supports the first slice. The first slice is a network slice that user equipment UE expects to access.

For more detailed descriptions of the processing unit 602 and the communication unit 601, refer to related descriptions in the foregoing method embodiments.

The communication apparatus shown in FIG. 10 may be a core network device, may be an apparatus in the core network device, or may be an apparatus having a function of the core network device.

In an implementation, the communication apparatus may implement related operations of the core network device in the foregoing communication method. The processing unit 602 is configured to: when it is identified that a first CU does not support a first slice, select a second CU from a plurality of CUs that support the first slice. The communication unit 601 is configured to send first information of the second CU or a base station identifier of the second CU to the first CU. The first information of the second CU includes transport layer information of the second CU and an identifier or a name of the second CU. The first information of the second CU or the base station identifier of the second CU is used to set up a connection between a first DU and the second CU, or update a connection between a first DU and the first CU to a connection between the first DU and the second CU. The first DU is a DU that has set up a connection to the first CU. The first slice is a network slice that user equipment UE expects to access.

For more detailed descriptions of the processing unit 602 and the communication unit 601, refer to related descriptions in the foregoing method embodiments.

The communication apparatus shown in FIG. 11 may include a processor 701 and an interface circuit 702. The processor 701 and the interface circuit 702 are coupled to each other. It may be understood that the interface circuit 702 may be an interface circuit or an input/output interface. Optionally, the communication apparatus 700 may further include a memory 703, configured to store instructions to be executed by the processor 701, input data required by the processor 701 to run the instructions, or data generated after the processor 701 runs the instructions.

When the communication apparatus is a DU in an access network device, the interface circuit 702 performs S101 and S102 in FIG. 2. Alternatively, the interface circuit 702 performs S201, S203, S205, and S206 in FIG. 3, and the processor 701 performs S202 in FIG. 3. Alternatively, the interface circuit 702 performs S303 and S304 in FIG. 4. Alternatively, the interface circuit 702 performs S404 and S405 in FIG. 5. Alternatively, the interface circuit 702 performs S502 in FIG. 6 to FIG. 9.

When the communication apparatus is a first CU in an access network device, the interface circuit 702 performs S101 in FIG. 2. Alternatively, the interface circuit 702 performs S201, S203, and S205 in FIG. 3, and the processor 701 performs S204 in FIG. 3. Alternatively, the interface circuit 702 performs S303 in FIG. 4, and the processor 701 performs S301 and S302 in FIG. 4. Alternatively, the interface circuit 702 performs S403 and S404 in FIG. 5. Alternatively, the interface circuit 702 performs S501 in FIG. 6. Alternatively, the interface circuit 702 performs S201, S203, S501, and S502 in FIG. 7, and the processor 701 performs S204 in FIG. 7. Alternatively, the interface circuit 702 performs S501 in FIG. 8, and the processor 701 performs S301 and S302 in FIG. 8. Alternatively, the interface circuit performs S403 and S501 in FIG. 9.

When the communication apparatus is a second CU in an access network device, the interface circuit 702 performs S102 in FIG. 2. Alternatively, the interface circuit 702 performs S206 in FIG. 3. Alternatively, the interface circuit 702 performs S304 in FIG. 4. Alternatively, the interface circuit 702 performs S405 in FIG. 5. Alternatively, the interface circuit 702 performs S501 and S502 in FIG. 6 to FIG. 9.

When the communication apparatus is an apparatus in a core network device, the interface circuit 702 performs S403 in FIG. 5 or FIG. 9, and the processor 701 performs S401 and S402 in FIG. 5 or FIG. 9.

When the communication apparatus in FIG. 10 or FIG. 11 is an access network device or a BBU, the communication apparatus may include the foregoing CU and DU, that is, perform related functions performed by the foregoing DU and CU.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, to enable the processor to read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A communication method, wherein the method comprises:
receiving, by a first distributed unit DU, first information of a second CU from a first central unit CU, wherein
the first CU is a CU that has set up a connection to the first DU and that does not support a first slice, the first information of the second CU comprises transport layer information of the second CU and an identifier or a name of the second CU, the second CU is a CU that supports the first slice, and the first slice is a network slice that user equipment UE expects to access; and
setting up, by the first DU, a connection to the second CU based on the first information of the second CU.

2. The method according to claim 1, wherein the method further comprises:
removing, by the first DU, the connection to the first CU.

3. The method according to claim 1 or 2, wherein before the receiving, by a first DU, first information of a second CU from a first central unit CU, the method further comprises:
sending, by the first DU, second information to the first CU, wherein the second information indicates the first CU to select the second CU that supports the first slice.

4. The method according to claim 3, wherein the method further comprises:
receiving, by the first DU, third information from the first CU, wherein the third information comprises slice information supported by the first CU;
identifying, by the first DU based on the third information, whether the first CU supports the first slice; and
when identifying that the first CU does not support the first slice, performing, by the first DU, the step of sending second information to the first CU.

5. A communication method, wherein the method comprises:
receiving, by a second central unit CU, fourth information from a first CU, wherein the fourth information indicates the second CU to update a connection between the first CU and a first DU to a connection between the first DU and the second CU; and
updating, by the second CU based on the fourth information, the connection between the first CU and the first DU to the connection between the first DU and the second CU, wherein
the first CU is a CU that has set up a connection to the first DU and that does not support a first slice, the second CU is a CU that supports the first slice, and the first slice is a network slice that user equipment UE expects to access.

6. A communication method, wherein the method comprises:
sending, by a first central unit CU, first information of a second CU to a first distributed unit DU, wherein the first information of the second CU comprises transport layer information of the second CU and an identifier or a name of the second CU,
the first information of the second CU is used by the first DU to set up a connection to the second CU,
the first CU is a CU that has set up a connection to the first DU and that does not support a first slice, the second CU is a CU that supports the first slice, and the first slice is a network slice that user equipment UE expects to access.

7. The method according to claim 6, wherein before the sending, by a first CU, first information of a second CU to a first DU, the method further comprises:
selecting, by the first CU, the second CU from a plurality of CUs that can support the first slice.

8. The method according to claim 7, wherein before the selecting, by the first CU, the second CU from a plurality of CUs that can support the first slice, the method further comprises:
receiving, by the first CU, second information from the first DU, wherein the second information indicates the first CU to select the second CU that supports the first slice.

9. The method according to claim 8, wherein before the receiving, by the first CU, second information from the first DU, the method further comprises:
sending, by the first CU, third information to the first DU, wherein the third information comprises slice information supported by the first CU, and
the third information is used by the first DU to identify whether the first CU supports the first slice.

10. The method according to claim 7, wherein the method further comprises:
identifying, by the first CU based on slice information supported by the first CU, whether the first CU supports the first slice; and
when identifying that the first CU does not support the first slice, performing, by the first CU, the step of selecting the second CU from a plurality of CUs that can support the first slice.

11. The method according to claim 6, wherein before the sending, by a first CU, first information of a second CU to a first DU, the method further comprises:
receiving, by the first CU, the first information of the second CU from a core network device, wherein the first information of the second CU is sent by the core network device when the core network device identifies that the first CU does not support the first slice, and the second CU is selected by the core network device from a plurality of CUs that can support the first slice.

12. A communication method, wherein the method comprises:
sending, by a first central unit CU, fourth information to a second central unit CU, wherein
the fourth information indicates the second CU to update a connection between the first CU and a first DU to a connection between the first DU and the second CU,
the first CU is a CU that has set up a connection to the first DU and that does not support a first slice, the second CU is a CU that supports the first slice, and the first slice is a network slice that user equipment UE expects to access.

13. The method according to claim 12, wherein before the sending, by a first CU, fourth information to a first DU, the method further comprises:
selecting, by the first CU, the second CU from a plurality of CUs that can support the first slice.

14. The method according to claim 13, wherein before the selecting, by the first CU, the second CU from a plurality of CUs that can support the first slice, the method further comprises:
receiving, by the first CU, second information from the first DU, wherein the second information indicates the first CU to select the second CU that supports the first slice.

15. The method according to claim 14, wherein before the receiving, by the first CU, second information from the first DU, the method further comprises:
sending, by the first CU, third information to the first DU, wherein the third information comprises slice information supported by the first CU, and
the third information is used by the first DU to identify whether the first CU supports the first slice.

16. The method according to claim 13, wherein the method further comprises:
identifying, by the first CU based on slice information supported by the first CU, whether the first CU supports the first slice; and
when identifying that the first CU does not support the first slice, performing, by the first CU, the step of selecting the second CU from a plurality of CUs that can support the first slice.

17. The method according to claim 12, wherein the method further comprises:
receiving, by the first CU, first information of the second CU or a base station identifier of the second CU from a core network device, wherein the second CU is selected by the core network device from a plurality of CUs that can support the first slice; and
performing, by the first CU based on the first information of the second CU or the base station identifier of the second CU, the step of sending fourth information to a second CU.

18. A communication method, wherein the method comprises:
when identifying that a first central unit CU does not support a first slice, selecting, by a core network device, a second CU from a plurality of CUs that support the first slice; and
sending, by the core network device, first information of the second CU or a base station identifier of the second CU to the first CU, wherein
the first information of the second CU comprises transport layer information of the second CU and an identifier or a name of the second CU,
the first information of the second CU or the base station identifier of the second CU is used to set up a connection between a first DU and the second CU, or update a connection between a first DU and the first CU to a connection between the first DU and the second CU,
the first DU is a DU that has set up a connection to the first CU, and the first slice is a network slice that user equipment UE expects to access.

19. A communication apparatus, wherein the apparatus comprises:
a communication unit, configured to receive first information of a second CU from a first central unit CU, wherein
the first CU is a CU that has set up a connection to a first distributed unit DU and that does not support a first slice, the first information of the second CU comprises transport layer information of the second CU and an identifier or a name of the second CU, the second CU is a CU that supports the first slice, and the first slice is a network slice that user equipment UE expects to access; and
the communication unit is further configured to set up a connection to the second CU based on the first information of the second CU.

20. A communication apparatus, wherein the apparatus comprises:
a communication unit, configured to receive fourth information from a first central unit CU, wherein the fourth information indicates a second CU to update a connection between the first CU and a first DU to a connection between the first DU and the second CU; and
a processing unit, configured to update, based on the fourth information, the connection between the first CU and the first DU to the connection between the first DU and the second CU, wherein
the first CU is a CU that has set up a connection to the first DU and that does not support a first slice, the second CU is a CU that supports the first slice, and the first slice is a network slice that user equipment UE expects to access.

21. A communication apparatus, wherein the apparatus comprises:
a communication unit, configured to send first information of a second central unit CU to a first distributed unit DU, wherein the first information of the second CU comprises transport layer information of the second CU and an identifier or a name of the second CU,
the first information of the second CU is used by the first DU to set up a connection to the second CU,
a first CU is a CU that has set up a connection to the first DU and that does not support a first slice, the second CU is a CU that supports the first slice, and the first slice is a network slice that user equipment UE expects to access.

22. A communication apparatus, wherein the apparatus comprises:
a communication unit, configured to send fourth information to a second central unit CU, wherein
the fourth information indicates the second CU to update a connection between a first CU and a first DU to a connection between the first DU and the second CU,
the first CU is a CU that has set up a connection to the first DU and that does not support a first slice, the second CU is a CU that supports the first slice, and the first slice is a network slice that user equipment UE expects to access.

23. A communication apparatus, wherein the apparatus comprises:
a processing unit, configured to: when it is identified that a first central unit CU does not support a first slice, select a second CU from a plurality of CUs that support the first slice; and
a communication unit, configured to send first information of the second CU or a base station identifier of the second CU to the first CU, wherein
the first information of the second CU comprises transport layer information of the second CU and an identifier or a name of the second CU,
the first information of the second CU or the base station identifier of the second CU is used to set up a connection between a first DU and the second CU, or update a connection between a first DU and the first CU to a connection between the first DU and the second CU,
the first DU is a DU that has set up a connection to the first CU, and the first slice is a network slice that user equipment UE expects to access.

24. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 4 by using a logic circuit or by executing code instructions.

25. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to claim 5, the method according to any one of claims 6 to 11, or the method according to any one of claims 12 to 17 by using a logic circuit or by executing code instructions.

26. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to claim 15 by using a logic circuit or by executing code instructions.

27. A communication apparatus, comprising the communication apparatus according to claim 19 or 24 and the communication apparatus according to any one of claims 20 to 22.

28. A communication system, comprising the communication apparatus according to claim 19 or 24 and the communication apparatus according to any one of claims 20 to 22 or claim 25.

29. A communication system, comprising the communication apparatus according to claim 19 or 24, the communication apparatus according to any one of claims 20 to 22 or claim 25, and the communication apparatus according to claim 23 or 26.
